# FASCICULE DE BREVET EUROPEEN

(11) **EP 1 257 674 B1**
(45) Date de publication et mention de la délivrance du brevet: **21.12.2005**
(21) Numéro de dépôt: 01907756.9
(22) Date de dépôt: 09.02.2001
(51) Int. Cl.: C22B 7/02, C22B 19/20, C22B 7/00, C22B 19/30

(54) **PROCEDE DE VALORISATION DES POUSSIERES D'ACIERIES**
VERFAHREN ZUM AUFBEREITEN UND VALORISIEREN VON STAHLWERKSSTÄUBEN
METHOD FOR UPGRADING STEEL PLANT DUST

(30) Priorité: 23.02.2000 FR 0002261
(43) Date de publication de la demande: 20.11.2002
(73) Titulaire: RECUPAC, 38570 Le Cheylas (FR)
(72) Inventeur: TEDJAR, Farouk, F-38570 Le Cheylas (FR); JUIF, Frédéric, F-38430 Les Crètes-Moirans (FR)
(74) Mandataire: Geismar, Thierry
(86) Numéro de dépôt international: PCT/FR2001/000390
(87) Numéro de publication internationale: WO 2001/062991

(56) Documents cités:
- EP-A- 0 939 138
- WO-A-99/53108
- FR-A- 2 282 477
- US-A- 4 572 771
- US-A- 6 022 406
- DREISINGER D B ET AL: "THE HYDROMETALLURGICAL TREATMENT OF CARBON STEEL ELECTRIC ARC FURNACE DUSTS BY THE UBC-CHAPARRAL PROCESS" HYDROMETALLURGY,NL,ELSEVIER SCIENTIFIC PUBLISHING CY. AMSTERDAM, vol. 25, no. 2, 1 août 1990 (1990-08-01), pages 137-152, XP000140405 ISSN: 0304-386X

## Description

La présente invention concerne un procédé de valorisation des poussières d'aciéries.

L'industrie sidérurgique, de part son activité, produit des déchets sous forme de poussières.

Lors de la production d'acier dans un four électrique, ces poussières résultent de la réaction suivante.

Au-dessus du bain d'acier en ébullition, de fines particules de fer sont dispersées dans la phase vapeur et entraînées par l'aspiration d'air. Dans ce courant d'air, les particules sont refroidies et, sous l'action de l'oxygène de l'air, transformées en oxydes supérieurs.

Les métaux les plus volatiles passent en phase vapeur à la température de fonctionnement du four. Sous l'effet de l'aspiration, ces métaux volatiles sont oxydés et refroidis à l'air et se retrouvent sous forme d'oxydes libres ou de structures mixtes avec les oxydes de fer.

La composition des poussières d'aciéries dépend de la nature du procédé sidérurgique. Les poussières d'aciéries contiennent des quantités variables en éléments majoritaires tel que fer, zinc, calcium et silicium sous forme d'oxydes simples ou mixtes et des éléments minoritaires tels que cuivre, manganèse, chrome, cadmium, plomb et chlorures.

Les poussières d'aciéries contiennent donc des métaux lourds non dégradables au cours du temps et toxiques pour le monde du vivant.

Sachant que la production de poussières est d'environ une vingtaine de kilogrammes par tonne d'acier c'est à dire de l'ordre de 500 000 T/an en Europe, le retraitement de ces poussières constitue un véritable enjeu écologique et économique.

Jusqu'à présent, les aciéries devaient déposer en décharge de classe 1 leurs poussières issues de leur activité afin qu'elles soient stabilisées. Ce passage obligé en décharge occasionnait, pour l'industrie sidérurgique, une dépense non négligeable.

L'invention se propose de fournir aux industriels concernés une alternative économiquement et écologiquement plus intéressante.

En effet, l'invention vise à éliminer ces déchets en utilisant les poussières de l'industrie de la sidérurgie dans un procédé permettant de séparer différents composants. La pureté de ceux-ci est alors suffisante pour leur permettre de constituer des matières premières utilisables dans d'autres industries telles que l'industrie des pigments minéraux entre autre.

Les demandes de brevets PCT/FR96/01202 et PCT/FR99/00813 constituent l'art antérieur de l'invention.

La demande de brevet PCT/FR96/01202 fait état d'un procédé de préparation de pigments minéraux à partir de poussières d'aciéries. Ce procédé comprend les étapes suivantes :
a) séparation des poussières en deux fractions magnétiques et non magnétique ;
b) soumission de la fraction non magnétique à une réaction de lixiviation basique ;
c) rinçage, neutralisation et séparation des phases solide/liquide ;
d) calcination entre 450°C et 650°C de la charge ;
e) traitement à l'acide sulfurique + catalyseur de la charge calcinée ;
f) récupération de pigments minéraux
g) réutilisation des solutions issues des étapes c) et e) pour précipiter d'autre pigments.

La demande de brevet PCT/FR99/00813, quant à elle, fait état d'un procédé de traitement de poussières d'aciéries en vue de la récupération des éléments valorisables. Ce procédé comporte :
- une attrition dans l'eau ;
- une classification hydraulique de la charge;
- un lavage ;
- un traitement à chaud ;
- un traitement thermique entre 240°C et 800°C ;
- un traitement par de l'acide sulfurique de concentration comprise entre 5% et 8%.

Les procédés décrits dans les deux demandes de brevet constituant l'art antérieur de l'invention fournissaient des pigments minéraux ou des éléments valorisables de pureté inacceptable pour les industriels utilisant ce type de produits.

L'invention vise donc à apporter une solution en fournissant un procédé de valorisation de poussières d'aciéries permettant d'obtenir des pigments minéraux ou des éléments valorisables de pureté suffisante pour rendre ces produits commercialisables.

L'invention a pour objet un procédé de valorisation de poussières d'aciéries en vue de récupérer des composés réutilisables industriellement, selon la revendication 1.

Selon un mode de réalisation du procédé, la réaction d'oxydation est réalisée à l'aide d'un oxydant pris dans le groupe comprenant l'eau oxygénée, l'oxygène et l'air.

Selon un mode de réalisation du procédé, l'étape d'oxydation/neutralisation est réalisée sensiblement entre 10°C et 100°C.

Selon un mode de réalisation du procédé, l'étape de lixiviation acide est réalisée à l'aide d'une solution d'acide sulfurique titrant sensiblement entre 8% et 25% d'acide et à une température sensiblement comprise entre 50°C et 100°C.

Selon un mode de réalisation du procédé, la purification acide est réalisée à un pH sensiblement compris entre 2 et 4 et à une température sensiblement comprise entre 20°C et 100°C.

Selon un mode de réalisation du procédé, une étape de classification hydraulique est réalisée après l'étape d'attrition et de dilution et avant l'étape de séparation liquide/solide et de lavage du solide.

Selon un mode de réalisation du procédé, à partir de la phase liquide issue de l'étape d'oxydation/neutralisation, on récupère du zinc métal, des oxydes de zinc et/ou de la ferrite de zinc.

Selon un mode de réalisation du procédé, celui-ci comprend une étape de séchage et/ou de traitement thermique de la phase solide issue de l'étape d'oxydation/neutralisation permettant d'obtenir des oxydes de fer et/ou des oxyhydroxydes de fer.

Selon un mode de réalisation du procédé, celui-ci comprend une étape d'électrolyse de la phase liquide issue de l'étape d'oxydation/neutralisation, permettant d'obtenir du zinc métal.

D'autres objets et avantages de l'invention apparaîtront au cours de la description qui va être faite en se référant à la figure qui est diagramme schématique représentant les étapes essentielles du procédé de valorisation des poussières d'aciéries dans leur ordre de réalisation.

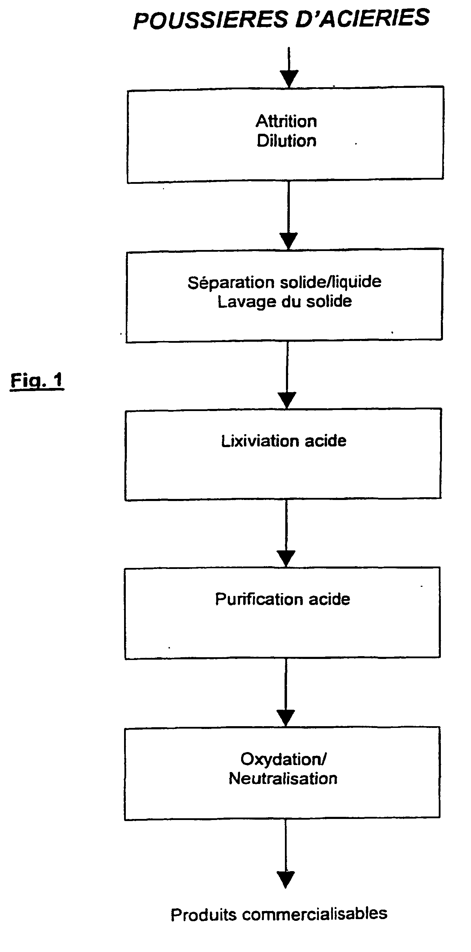

La figure 1 représente schématiquement les étapes essentielles du procédé, selon l'invention, dans leur ordre de réalisation.

Le procédé de traitement de poussières d'aciéries, pouvant contenir Zn, Fe, Pb, Cd, Cr, Ca, Si et des sels entres autres, comprend, au préalable, une étape d'attrition de poussières brutes dans l'eau.

L'attrition dans l'eau permet de désagréger les agglomérats de poussières qui ont tendance à se former. Cette étape facilite la séparation ultérieure de la charge en deux fractions :
- les poussières de dimensions supérieures à 40 microns ;
- les poussières de dimensions inférieures à 40 microns.

Cette étape de traitement en phase humide revêt une grande importance dans le procédé et constitue donc, à ce titre, une étape essentielle dans la mesure où elle permet :
- d'accélérer la dissolution des sels solubles ;
- de libérer les fractions métalliques masquées par les oxydes adsorbées en surface.

La charge, ainsi obtenue, est ensuite diluée dans de l'eau. Cette dilution sert à solubiliser en tout ou partie les sels, tels que les chlorures et/ou les sulfates.

Une étape de séparation des phases solide/liquide générées est ensuite effectuée, pouvant s'accompagner d'un lavage de la phase solide. Ce lavage a pour but d'éliminer au maximum les sels encore présents dans la phase solide dans le cas où ils n'auraient pas été solubilisés dans l'étape d'attrition et de dilution. La phase solide est, pour finir, séparée des eaux de lavages.

Cette étape d'élimination des sels est importante dans la mesure où elle conditionne, en partie, le degré de pureté des éléments ou composés qui seront isolés ultérieurement.

La phase solide peut subir, ensuite, une étape de lixiviation acide. Le solide est pour cela traité avec une solution acide, par exemple une solution d'acide sulfurique, afin de dissoudre en tout ou partie les métaux tels que le fer, le zinc, le plomb, le cadmium, le nickel, le chrome. La phase liquide, contenant des métaux dissous, est séparée de la phase solide.

Le silicium, insoluble, est contenu dans la phase solide. L'étape de lixiviation acide a donc permis, entre autre, de séparer le silicium des autres éléments ou composés à valoriser.

La phase liquide, acide, est ensuite purifiée afin d'éliminer, en tout ou partie, les métaux tels que le plomb, le cadmium, le nickel, le chrome ainsi que le calcium, si nécessaire.

Cette étape de purification acide consiste à ajouter à la phase liquide acide, de pH situé entre 2 et 4, du fluorure de sodium pour précipiter le calcium si nécessaire et de la poudre de zinc et /ou de fer pour cémenter le plomb, le cadmium, le nickel et le chrome.

La poudre de zinc, utilisée dans cette étape de purification, peut être celle obtenue par le procédé de l'invention.

Par cémentation, on entend dépôt par réduction. Au cours de la cémentation, un corps noble, oxydé et dissous, est réduit par un autre corps métallique ajouté à la solution sous forme de poudre.

La phase liquide, issue de l'étape de purification acide, est ensuite récupérée. Elle comprend les métaux fer et zinc.

Une étape, incluant une réaction d'oxydation et une réaction de neutralisation, réactions pouvant avoir lieu simultanément, est opérée sur la phase liquide comprenant notamment le fer. Cette étape a pour but de précipiter le fer sous forme d'oxyhydroxydes de fer et/ou d'oxydes de fer, tandis que le zinc reste en solution dans le milieu réactionnel.

La réaction d'oxydation est réalisée à l'aide d'un oxydant liquide tel que eau oxygénée ou un oxydant gazeux tel que air ou oxygène à un pH maintenu entre 2,5 et 5 à l'aide d'une solution basique telle qu'une solution de soude ou analogue. Cette condition de pH est importante afin d'éviter la précipitation du zinc en même temps que celle du fer.

A l'issue de cette étape d'oxydation/neutralisation, on obtient :
- directement des produits commercialisables tels que oxyhydroxydes de fer et/ou oxydes de fer ; et
- indirectement, des produits commercialisables tels des oxydes de zinc, ferrites de zinc et zinc métal, après traitement du milieu réactionnel.

On estimera pour la suite de la description qu'une tonne de poussières d'aciéries subisse le procédé de valorisation décrit ci-dessous.

La première étape du procédé de valorisation des poussières d'aciéries est une étape d'attrition. Cette étape de traitement en phase humide est réalisée dans une unité d'attrition en présence d'eau.

Le rapport R1=(Matière sèche de poussières d'aciéries en kg) / (volume d'eau en litre) doit être choisi de façon à permettre une friction convenable entre les particules solides tout en offrant un volume de liquide suffisant pour permettre la dissolution des fractions solubles dans l'eau tels que les sels.

Le rapport R1 est sensiblement compris entre 2,2 et 2,7. Cette étape est menée durant 10 à 20 minutes.

La pulpe, constituée par la charge attritée de poussières d'aciéries délayée dans l'eau, est ensuite diluée dans de l'eau de façon suffisante pour :
- achever la dissolution des sels en particulier les chlorures et les sulfates;
- mettre en suspension les particules très fines ; et
- assurer une densité adaptée à une classification hydraulique.

La dilution de la pulpe permet d'atteindre une concentration en masse sèche comprise sensiblement entre 4% et 15%.

La pulpe ainsi diluée subit ensuite une étape de classification hydraulique. La classification hydraulique est avantageusement effectuée dans des hydrocyclones de coupures adaptées à la granulométrie des poussières qui y sont introduites.

La pulpe peut passer au travers d'un hydrocyclone ayant un diamètre de coupure compris entre 30 et 100 microns. La perte de charge est sensiblement comprise entre 0.6 bar et 1 bar et le rapport R2=(débit de pulpe entrante)/(débit de contre-courant en eau) est sensiblement compris entre 100 et 200.

Au terme du cyclonage, on distingue :
- la sous-verse riche en magnétite et pouvant comprendre du carbone et du fer ; et
- la sur-verse riche en métaux lourds, dans la partie supérieure du cylindre verticale de l'hydrocyclone.

La sous-verse permet de récupérer 100 kg à 200 kg de matières sèches tandis que la sur-verse permet de récupérer 800 kg à 900 kg de matières sèches en partant d'une tonne de poussières d'aciéries traitée.

La charge de la sous-verse peut faire l'objet par exemple d'un réenfournement après décantation, essorage et séchage ou alors peut faire l'objet d'une valorisation de la fraction de magnétite après extraction.

La pulpe diluée ou la sur-verse dans le cas où la pulpe diluée a subi une classification hydraulique, fait ensuite l'objet d'une étape de séparation solide/liquide. Cette séparation peut se faire, par exemple, par filtration à l'aide d'un filtre-presse. La phase solide est alors récupérée sur le filtre. Simultanément, un lavage du solide peut être opéré afin d'éliminer les sels qui n'auraient pas été dissous dans l'eau de dilution de l'étape d'attrition et de dilution préalable.

A l'issue de cette étape de séparation solide/liquide et de lavage, la concentration dans le solide en chlorures et en sulfates est inférieure à environ 1000 ppm pour chacun des deux sels.

Une étape de lixiviation basique étant shuntée, le solide issu de l'étape de séparation solide / liquide et de lavage subit une étape de lixiviation acide qui conduit à la solubilisation du fer, du zinc, du plomb du nickel, du chrome et du cadmium qu'il pourrait contenir, tandis que le silicium reste insoluble.

L'acide utilisé pour l'étape de lixiviation acide est, par exemple, l'acide sulfurique titrant sensiblement entre 8% et 25% d'acide. Cette étape de lixiviation acide est réalisée à une température sensiblement comprise entre 50°C et 100°C. La durée de l'étape dépend de la quantité de composés à solubiliser.

Le rapport R4=(Matière sèche en kg)/(volume réactionnel en litre) est sensiblement compris entre 0,05 et 0,15.

A l'issue de l'étape de lixiviation acide, le milieu réactionnel est, par exemple, filtré sur un filtre-presse de façon à séparer la phase solide contenant les composés insolubles tel que par exemple le silicium et la phase aqueuse acide ou filtrat contenant le fer et pouvant contenir également les éléments solubilisés tels que le zinc, le plomb, le cadmium, le nickel, le chrome.

Les concentrations en fer et en zinc sont sensiblement comprises entre 30 et 60 g/l pour le fer et entre 5 et 20 g/l pour le zinc.

Une étape de purification acide fait suite à l'étape de lixiviation acide. Cette étape de purification comprend une réaction de cémentation et éventuellement une réaction de décalcification.

Le filtrat de l'étape de lixiviation acide est purifié par cémentation de certains métaux tels que le plomb, le cadmium, le nickel, le chrome par ajout de zinc et/ou de fer. La quantité de zinc et/ou de fer à ajouter est fonction de la quantité de composés à cémenter.

Pour une tonne de poussières d'aciéries de départ, il faut jusqu'à environ 200 kg de zinc.

La cémentation a lieu à un pH sensiblement compris entre 2 et 4 et à une température sensiblement comprise entre 20°C et 100°C.

Une décalcification peut également être réalisée, si nécessaire, au cours de cette étape de purification acide, simultanément ou non à la réaction de cémentation. Pour décalcifier le filtrat de la réaction de lixiviation acide, on ajoute du fluorure de sodium audit filtrat afin de précipiter le calcium.

A l'issue de cette étape de purification acide, le milieu réactionnel est, par exemple, filtré sur un filtre-presse de façon à séparer les phases solide et liquide.

Le filtrat, issu de l'étape de purification acide, a une concentration globale en plomb, cadmium, nickel, chrome et calcium sensiblement inférieure à 5 mg/l et contient par contre une concentration importante en fer et en zinc.

La phase solide résultant de l'étape de purification acide peut être neutralisée et lavée de façon à atteindre un pH sensiblement compris entre 6,5 et 7. Cette phase solide peut être valorisée par la suite dans la mesure où elle contient des métaux lourds comme le plomb, le zinc...en quantité suffisante.

L'étape faisant suite à l'étape de purification acide est l'étape dite d'oxydation/neutralisation. Cette étape a pour but de faire précipiter le fer sous forme d'oxyhydroxydes de fer et/ou d'oxydes de fer suite à son oxydation.

Pour réaliser la réaction d'oxydation, on peut utiliser un oxydant liquide de type eau oxygénée à une concentration sensiblement comprise entre 5 et 35% ou un oxydant gazeux de type air ou oxygène.

Cette étape d'oxydation/neutralisation doit impérativement être réalisée à un pH compris entre 2,5 et 5. L'ajustement du pH dans cette plage de pH se fait simultanément à la réaction d'oxydation par ajout d'une base telle que la soude à une concentration sensiblement comprise entre 100 g/l et 200 g/l. La réaction est réalisée à une température sensiblement comprise entre 10°C et 100°C.

La réaction d'oxydation/neutralisation achevée, le milieu réactionnel est, par exemple, filtré sur un filtre-presse permettant de séparer la phase solide contenant des oxyhydroxydes de fer et/ou des oxydes de fer et la phase liquide ou filtrat contenant le zinc à une concentration pouvant atteindre 50 g/l.

La phase solide récupérée sur le filtre est lavée et séchée à une température sensiblement comprise entre 80°C et 150°C suivie éventuellement d'un traitement thermique réalisé à une température sensiblement comprise entre 400°C et 850°C. Les oxydes de fer et les oxyhydroxydes de fer obtenus après séchage et/ou traitement thermique constituent des produits commercialisables dans le domaine des pigments.

Le filtrat issu de l'étape d'oxydation/neutralisation contient essentiellement du zinc. Pour valoriser ce zinc, trois voies sont envisageables :
- électrolyse du filtrat permettant d'isoler du zinc métal ;
- synthèse de ferrite de zinc ;
- obtention d'oxydes de zinc.
Tous ces produits constituent des produits commercialisables.

A titre d'exemple, sans que cela soit exhaustif, en partant d'une tonne de poussières d'aciérie en tant que produit de départ, on arrive à obtenir :
- 600 kg d'oxyhydroxydes de fer et/ou d'oxydes de fer à l'issue du séchage et/ou du traitement thermique ;
- 300 kg de coproduits.

Ce procédé a pour avantages :
- d'être global puisqu'il vise à valoriser tous les métaux susceptibles d'être présents dans les poussières d'aciéries ;
- d'être économiquement et écologiquement avantageux par rapport à une mise en décharge de classe 1 de ce type de déchet ;
- d'assurer une meilleure pureté des produits ainsi valorisés par le procédé par rapport aux procédés de l'art antérieur ;
- de rendre ces produits valorisés commercialisables.

## Revendications

1. Procédé de valorisation de poussières d'aciéries en vue de récupérer des composés réutilisables industriellement, ledit procédé comportant :
- une étape d'attrition et de dilution ;
- une étape de séparation solide/liquide et de lavage du solide ;
- une étape de lixiviation acide ;
- une étape de purification acide comprenant une réaction de cémentation ou une réaction de cémentation et de décalcification ;
- une étape d'oxydation/neutralisation, étape comprenant une réaction d'oxydation du fer en oxyhydroxydes de fer et/ou en oxydes de fer, et une réaction de neutralisation du milieu réactionnel ;
ledit procédé ne comprenant pas d'étape de lixiviation basique préalablement à l'étape de lixiviation acide, et la réaction de neutralisation étant réalisée à l'aide d'une solution de soude, de potasse, de bicarbonate de sodium, de bicarbonate de potassium, d'ammoniac ou analogue afin de maintenir le pH du milieu réactionnel entre 2,5 et 5.

2. Procédé selon la revendication 1, **caractérisé en ce que** la réaction d'oxydation est réalisée à l'aide d'un oxydant pris dans le groupe comprenant l'eau oxygénée, l'oxygène et l'air.

3. Procédé selon l'une des revendications précédentes, **caractérisé en ce que** l'étape d'oxydation et de neutralisation est réalisée sensiblement entre 10°C et 100°C.

4. Procédé selon l'une des revendications précédentes, **caractérisé en ce que** l'étape de lixiviation acide est réalisée à l'aide d'une solution d'acide sulfurique titrant sensiblement entre 8% et 25% d'acide et à une température sensiblement comprise entre 50°C et 100°C.

5. Procédé selon des revendications précédentes, **caractérisé en ce que** la purification acide est réalisée à un pH sensiblement compris entre 2 et 4 et à une température sensiblement comprise entre 20°C et 100°C.

6. Procédé selon l'une des revendications précédentes, **caractérisé en ce qu'**une étape de classification hydraulique est réalisée après l'étape d'attrition et de dilution et avant l'étape de séparation liquide/solide et de lavage du solide.

7. Procédé selon l'une des revendications précédentes, **caractérisé en ce que** à partir de la phase liquide issue de l'étape d'oxydation/neutralisation, on récupère du zinc métal, des oxydes de zinc et/ou de la ferrite de zinc.

8. Procédé selon l'une des revendications précédentes, **caractérisé en ce qu'**il comprend une étape de séchage et/ou de traitement thermique de la phase solide issue de l'étape d'oxydation/neutralisation permettant d'obtenir des oxydes de fer et/ou des oxyhydroxydes de fer.

9. Procédé selon l'une des revendications précédentes, **caractérisé en ce qu'**il comprend une étape d'électrolyse de la phase liquide issue de l'étape d'oxydation/neutralisation, permettant d'obtenir du zinc métal.

## Patentansprüche

1. Verfahren zur Nutzbarmachung von Staub aus Stahlwerken zwecks Rückgewinnung der industriell wieder verwertbaren Bestandteile, wobei das genannte Verfahren Folgendes umfasst :
- eine Zerreibungs- und Auflösungsstufe;
- eine Trennstufe Feststoffe / Flüssigkeit und eine Waschstufe des Feststoffs;
- eine saure Auslaugstufe;
- eine saure Reinigungsstufe mit einer Zementierreaktion oder einer Zementier- und Entkalkungsreaktion;
- eine Oxidations- / Neutralisationsstufe, mit einer Oxidationsreaktion des Eisens in Eisenoxihydroxid und / oder in Eisenoxide und eine Neutralisationsreaktion des Reaktionsmilieus;
wobei das genannte Verfahren keine basische Auslaugstufe vor dem sauren Auslagen umfasst und die Neutralisationsreaktion dabei mithilfe einer Soda-, Kalium-, Natriumbikarbonat-, Kaliumbikarbonat-, Ammoniaklösung oder dergleichen realisiert wird, um den pH-Wert des Reaktionsmilieus zwischen 2,5 und 5 zu halten.

2. Verfahren gemäß Anspruch 1, **dadurch gekennzeichnet, dass** die Oxidationsreaktion mithilfe eines aus der Wasserstoffperoxyd, Sauerstoff und Luft umfassenden Gruppe entnommenes Oxidationsmittels realisiert wird.

3. Verfahren gemäß einem der vorherigen Ansprüche, **dadurch gekennzeichnet, dass** die Oxidations- und Neutralisationsstufe deutlich zwischen 10°C und 100°C realisiert wird.

4. Verfahren gemäß einem der vorherigen Ansprüche, **dadurch gekennzeichnet, dass** die saure Auslaugstufe mithilfe einer deutlich zwischen 8 % und 25 % Säure titrierenden Schwefelsäurelösung bei einer deutlich zwischen 50°C und 100°C inbegriffenen Temperatur realisiert wird.

5. Verfahren gemäß einem der vorherigen Ansprüche, **dadurch gekennzeichnet, dass** die saure Reinigung bei einem deutlich zwischen 2 und 4 inbegriffenen pH-Wert und bei einer deutlich zwischen 20°C und 100°C inbegriffenen Temperatur realisiert wird.

6. Verfahren gemäß einem der vorherigen Ansprüche, **dadurch gekennzeichnet, dass** nach der Zerreibungs- und Auflösungsstufe und vor der Trennstufe Flüssigkeit / Feststoff und der Waschstufe des Feststoffs eine hydraulische Klassifizierungsstufe realisiert wird.

7. Verfahren gemäß einem der vorherigen Ansprüche, **dadurch gekennzeichnet, dass** Zinkmetall, Zinkoxide und / oder Zinkferrit ausgehend von der aus der Oxidations- / Neutralisationsphase stammenden flüssigen Phase wiedergewonnen wird.

8. Verfahren gemäß einem der vorherigen Ansprüche, **dadurch gekennzeichnet, dass** es eine den Erhalt von Eisenoxid und / oder Eisen-Oxihydroxid erlaubende Trocknungs- und / oder thermische Behandlungsstufe der aus der Oxidations- / Neutralisationsphase stammenden festen Phase umfasst.

9. Verfahren gemäß einem der vorherigen Ansprüche, **dadurch gekennzeichnet, dass** es eine den Erhalt von Zinkmetall erlaubende Elektroylsephase der aus der Oxidations- / Neutralisationsstufe stammenden flüssigen Phase umfasst.

## Claims

1. A method of reprocessing steelworks dust with a view to recovering industrially reusable compounds, the said method comprising:
- an attrition and dilution step;
- a step of solid-liquid separation and washing of the solid;
- an acidic leaching step;
- an acidic purification step comprising a cementation reaction or a cementation and decalcification reaction;
- an oxidation/neutralisation step, a step comprising an oxidation reaction of the iron into iron oxyhydroxides and/or iron oxides, and a neutralisation reaction of the reaction medium;
the said method not comprising any basic leaching step prior to the acidic leaching step, and the neutralisation reaction being performed using a solution of soda, potash, sodium bicarbonate, potassium bicarbonate, ammonia or the like in order to maintain the pH of the reaction medium at between 2.5 and 5.

2. A method according to Claim 1, **characterised in that** the oxidation reaction is carried out by means of an oxidant taken from the group comprising hydrogen peroxide, oxygen and air.

3. A method according to one of the preceding claims, **characterised in that** the oxidation and neutralisation step is carried out at between approximately 10°C and 100°C.

4. A method according to one of the preceding claims,
**characterised in that** the acidic leaching step is carried out by means of a sulphuric acid solution with an acid concentration of between approximately 8% and 25% and a temperature between approximately 50°C and 100°C.

5. A method according to the preceding claims, **characterised in that** the acidic purification is carried out at a pH of between approximately 2 and 4 and at a temperature of between approximately 20°C and 100°C.

6. A method according to one of the preceding claims, **characterised in that** a hydraulic classification step is carried out after the attrition and dilution step and before the step of liquid/solid separation and washing of the solid.

7. A method according to one of the preceding claims, **characterised in that**, from the liquid phase issuing from the oxidation/neutralisation step, metallic zinc, zinc oxides and/or zinc ferrite are recovered.

8. A method according to one of the preceding claims, **characterised in that** it comprises a step of drying and/or heat treatment of the solid phase issuing from the oxidation/neutralisation step making it possible to obtain iron oxides and/or iron oxyhydroxides.

9. A method according to one of the preceding claims, **characterised in that** it comprises a step of electrolysis of the liquid phase issuing from the oxidation/neutralisation step, making it possible to obtain metallic zinc.
